(19) Europäisches Patentamt
European Patent Office
Office européen des brevets

(11) **EP 4 357 059 A1**

(12) **EUROPEAN PATENT APPLICATION**
published in accordance with Art. 153(4) EPC

(43) Date of publication:
**24.04.2024 Bulletin 2024/17**

(21) Application number: **21950944.5**

(22) Date of filing: **21.07.2021**

(51) International Patent Classification (IPC):
**B23H 7/02** (2006.01)

(52) Cooperative Patent Classification (CPC):
**B23H 7/02**

(86) International application number:
**PCT/JP2021/027283**

(87) International publication number:
**WO 2023/002594 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FANUC CORPORATION**
**Oshino-mura**
**Minamitsuru-gun**
**Yamanashi 401-0597 (JP)**

(72) Inventors:
• **MASUDA, Masashi**
**401-0597 Yamanashi (JP)**
• **KAWAHARA, Akiyoshi**
**401-0597 Yamanashi (JP)**
• **NAKASHIMA, Yasuo**
**401-0597 Yamanashi (JP)**

(74) Representative: **Keil & Schaafhausen**
**Patentanwälte PartGmbB**
**Bockenheimer Landstraße 25**
**60325 Frankfurt am Main (DE)**

(54) **REMAINING AMOUNT ESTIMATION DEVICE AND REMAINING AMOUNT ESTIMATION METHOD**

(57)     A remaining amount estimation device (30) estimates the remaining amount of wire (S) on a wire bobbin (18) on which a wire electrode (16) has been wound and comprises: an acquisition unit (50) that acquires a first rotational position (60) for the wire bobbin (18) and a second rotational position (62) for a delivery roller (20) that delivers the wire electrode (16); and a first estimation computation unit (52) that estimates the remaining amount of wire (S) using the ratio of the rotation amount of the wire bobbin (18) and the delivery roller (20) at each of a start time and an end time of a prescribed time period (T) and the total rotation amount ($\varphi$) that the delivery roller (T) has rotated during the prescribed time period (T).

FIG. 2

**Description**

TECHNICAL FIELD

The present invention relates to a remaining amount estimation device configured to estimate a remaining amount of a wire electrode that is wound around a wire bobbin of a wire electric discharge machine and a remaining amount estimation method executed by the remaining estimation device.

BACKGROUND ART

A wire electric discharge machine executes electric discharge machining using a wire electrode. The wire electrode is wound beforehand around a wire bobbin. Moreover, it should be noted that the amount of the wire electrode that is wound around the wire bobbin may also be referred to hereinafter as a "wire remaining amount".

The wire remaining amount gradually decreases during execution of electric discharge machining. In the case that the wire remaining amount runs out during execution of electric discharge machining, the electric discharge machining is interrupted. A conventional technique in order to prevent such an interruption is disclosed in JP H02-039824 U. This conventional technique relates to a method of calculating the wire remaining amount. This conventional technique involves a calculation using a degree of denseness of the wire electrode, and a winding diameter of the wire electrode. Moreover, in the disclosure of JP H02-039824 U, the degree of denseness is referred to as a winding ratio.

SUMMARY OF THE INVENTION

The conventional technique described above has at least the following problem. In order to implement the conventional technique described above, an operator measures the degree of denseness and the winding diameter. In this instance, the work of measuring both the degree of denseness and the winding diameter imposes a burden on the operator.

The present invention has the object of solving the aforementioned problem.

A first aspect of the present invention is characterized by a remaining amount estimation device for a wire electric discharge machine, wherein the wire electric discharge machine includes a wire bobbin, a feed roller configured to feed a wire electrode that is wound around the wire bobbin, a first rotational position detection sensor configured to detect a first rotational position of the wire bobbin, and a second rotational position detection sensor configured to detect a second rotational position of the feed roller, the remaining amount estimation device being configured to estimate a wire remaining amount of the wire electrode that is wound around the wire bobbin of the wire electric discharge machine, the remaining amount estimation device including an acquisition unit configured to acquire the first rotational position and the second rotational position, and a first estimation calculation unit configured to estimate the wire remaining amount at an ending time of a predetermined period, based on a first ratio that is a ratio of an amount of rotation of the wire bobbin and an amount of rotation of the feed roller at a starting time of the predetermined period, a second ratio that is a ratio of an amount of rotation of the wire bobbin and an amount of rotation of the feed roller at the ending time of the predetermined period, and a total amount of rotation that the feed roller has rotated during the predetermined period.

A second aspect of the present invention is characterized by a remaining amount estimation method for a wire electric discharge machine wherein the wire electric discharge machine includes a wire bobbin, a feed roller configured to feed a wire electrode that is wound around the wire bobbin, a first rotational position detection sensor configured to detect a first rotational position of the wire bobbin, and a second rotational position detection sensor configured to detect a second rotational position of the feed roller, the remaining amount estimation method for estimating a wire remaining amount of the wire electrode that is wound around the wire bobbin of the wire electric discharge machine, including an acquisition step of acquiring the first rotational position and the second rotational position, and an estimation calculation step of estimating the wire remaining amount at an ending time of a predetermined period, based on a first ratio that is a ratio of an amount of rotation of the wire bobbin and an amount of rotation of the feed roller at a starting time of the predetermined period, a second ratio that is a ratio of an amount of rotation of the wire bobbin and an amount of rotation of the feed roller at the ending time of the predetermined period, and a total amount of rotation that the feed roller has rotated during the predetermined period.

According to the aspects of the present invention, the wire remaining amount can be obtained while reducing the burden imposed on the operator.

BRIEF DESCRIPTION OF DRAWINGS

FIG. 1 is a configuration diagram of a remaining amount estimation system according to an embodiment;

FIG. 2 is a configuration diagram of a remaining amount estimation device shown in FIG. 1;

FIG. 3 is a flowchart illustrating a process flow of a remaining amount estimation method according to the embodiment;

FIG. 4 is a configuration diagram of a remaining amount estimation device according to an Exemplary Modification 1;

FIG. 5 is an explanatory diagram of a wire bobbin around which a wire electrode is wound;

FIG. 6 is an exemplary configuration of a reference table that is stored in a storage unit;

FIG. 7 is a flowchart illustrating a process flow of a remaining amount estimation method according to the Exemplary Modification 1;

FIG. 8 is a configuration diagram of a remaining amount estimation device according to an Exemplary Modification 2;

FIG. 9 is a configuration diagram of a remaining amount estimation system according to an Exemplary Modification 3; and

FIG. 10 is an explanatory diagram of a predetermined period.

## DETAILED DESCRIPTION OF THE INVENTION

[Embodiments]

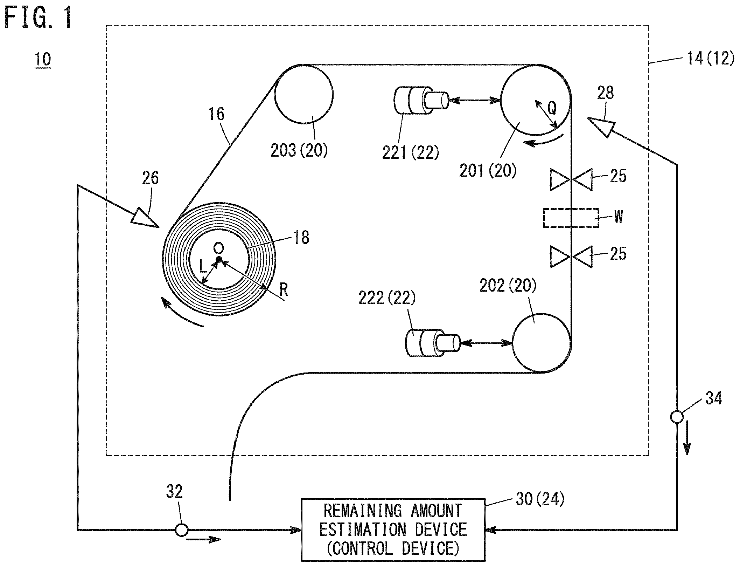

FIG. 1 is a configuration diagram of a remaining amount estimation system 10 according to an embodiment. Moreover, it should be noted that in the illustration in FIG. 1, there is included not only the remaining amount estimation system 10, but also a feeding mechanism 14 of a wire electric discharge machine 12.

The feeding mechanism 14 includes a wire bobbin 18, a plurality of feed rollers 20, and two motors 22.

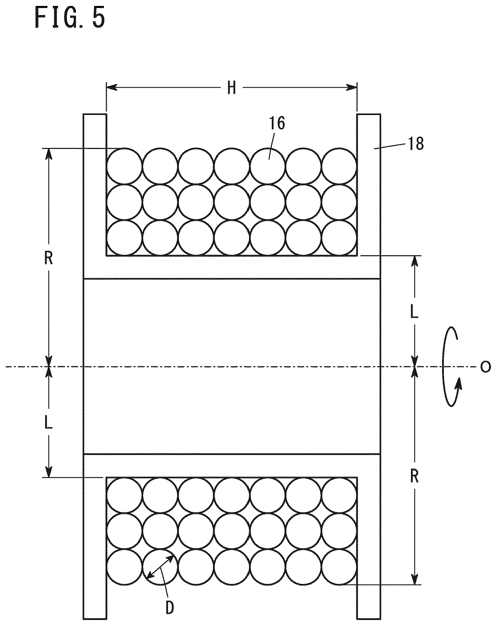

The wire bobbin 18 is a bobbin that is capable of rotating. The point O in FIG. 1 indicates an axis of rotation of the wire bobbin 18 (refer also to FIG. 5). A wire electrode 16 is wound around the wire bobbin 18. The wire electrode 16 is a wire material used for electric discharge machining. The wire electrode 16 is pulled out from the wire bobbin 18.

Each of the plurality of feed rollers 20 is a rotatable roller. The plurality of feed rollers 20 includes a first roller 201 and a second roller 202. The wire electrode 16 that is pulled out from the wire bobbin 18 is wound around the first roller 201 and the second roller 202 in this order.

The plurality of feed rollers 20 further include an auxiliary roller 203. The auxiliary roller 203 changes the direction in which the wire electrode 16 travels. Further, the auxiliary roller 203 reduces bending or deflection of the wire electrode 16. The number of the auxiliary rollers 203 installed is not particularly limited. There is also no particular limitation on the location where the auxiliary roller 203 is installed.

Each of the two motors 22, for example, is a servo motor. The two motors 22 include a first motor 221 and a second motor 222. The first motor 221 causes the first roller 201 to be rotated. The second motor 222 causes the second roller 202 to be rotated.

Each of the two motors 22 is controlled by a control device 24. The control device 24 is an electronic device (a computer) for the purpose of controlling the wire electric discharge machine 12. The control device 24, for example, is a computerized numerical controller (CNC).

The feeding mechanism 14 further includes two wire guides 25. The two wire guides 25 are installed between the first roller 201 and the second roller 202 (refer to FIG. 1). An object to be machined (workpiece) W is installed between the two wire guides 25. By each of the first roller 201 and the second roller 202 being made to rotate, the wire electrode 16 is fed from the wire bobbin 18 toward the workpiece W. The wire electrode 16 after having been passed through the workpiece W is fed to a collection box. It should be noted that the collection box is not illustrated.

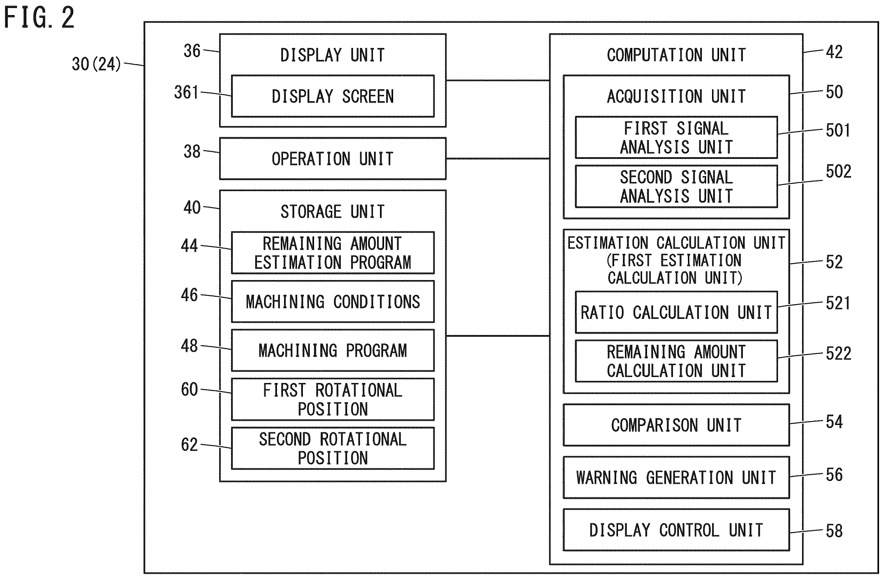

The wire electrode 16 moves relatively with respect to the workpiece W while being fed from the wire bobbin 18 toward the workpiece W. The wire electrode 16 moves relatively based on a machining program 48. The machining program 48 specifies a path of relative movement of the wire electrode 16. The machining program 48 is input to the control device 24 (refer to FIG. 2).

Further, a voltage is applied to the wire electrode 16. Consequently, an electric discharge is generated between the wire electrode 16 and the workpiece W. The voltage is applied to the wire electrode 16 based on machining conditions 46. The machining conditions 46 include one or more parameters. The machining conditions 46 are input to the control device 24 (refer to FIG. 2).

The workpiece W is machined in accordance with the relative movement of the wire electrode 16, and the electric discharge that takes place between the wire electrode 16 and the workpiece W. However, in the case that the wire remaining amount runs out during machining of the workpiece W, the wire electric discharge machine 12 stops midway through machining. In this case, the operator performs an operation of replenishing the wire electrode 16 (an operation of replacing the wire bobbin 18) and refeeding (reconnecting) the wire electrode 16. However, these operations impose a burden on the operator. Accordingly, for reducing such a burden on the operator, it is important to investigate the wire remaining amount prior to execution of machining.

However, it is not easy for the operator to investigate the wire remaining amount. For example, in the case that the conventional technique described above is implemented, it is necessary for the operator to measure both the degree of denseness and the winding diameter. The work of measuring both the degree of denseness and the winding diameter imposes a burden on the operator. In particular, it is difficult for the operator to accurately measure the degree of denseness.

The remaining amount estimation system 10 will be described while taking into account the preliminary explanation described above. The remaining amount estimation system 10 is a system for estimating the wire remaining amount S. The remaining amount estimation system 10 is equipped with a first rotational position detection sensor 26, a second rotational position detection sensor 28, and a remaining amount estimation device 30 (refer to FIG. 1).

The first rotational position detection sensor 26 is a sensor for detecting the rotational position of the wire bobbin 18. The first rotational position detection sensor 26 is appropriately installed in the wire electric discharge machine 12. The first rotational position detection sensor 26 outputs a signal in accordance with the rotational position of the wire bobbin 18. In the following description, the signal corresponding to the rotational position of the wire bobbin 18 is also referred to as a first detection signal 32. The first detection signal 32 is input to the remaining amount estimation device 30.

The second rotational position detection sensor 28 is a sensor for detecting the rotational position of the first roller 201. The second rotational position detection sensor 28 is appropriately installed in the wire electric discharge machine 12. The second rotational position detection sensor 28 outputs a signal in accordance with the rotational position of the first roller 201. In the following description, the signal corresponding to the rotational position of the first roller 201 is also referred to as a second detection signal 34. The second detection signal 34 is input to the remaining amount estimation device 30.

Moreover, it should be noted that the second rotational position detection sensor 28 may detect the rotational position of a shaft of the first motor 221.

FIG. 2 is a configuration diagram of the remaining amount estimation device 30 shown in FIG. 1.

The remaining amount estimation device 30 is an electronic device that estimates the wire remaining amount S. The remaining amount estimation device 30 serves in a dual manner as the control device 24 of the wire electric discharge machine 12. The remaining amount estimation device 30 is equipped with a display unit 36, an operation unit 38, a storage unit 40, and a computation unit 42 (refer to FIG. 2).

The display unit 36 is a display device having a display screen 361. Information is displayed on the display screen 361 as appropriate. The material of the display unit 36 includes a liquid crystal. However, the material of the display unit 36 is not limited to being a liquid crystal. For example, the material of the display unit 36 may include an OEL (Organic ElectroLuminescence) element.

The operation unit 38 is an input device that receives and accepts information input by an operator. The operator can input such information to the remaining amount estimation device 30 via the operation unit 38. The operation unit 38 includes, for example, an operation panel, a mouse, a keyboard, and a touch panel. The touch panel is installed on the display screen 361.

The storage unit 40 includes memories. For example, the storage unit 40 includes a RAM (Random Access Memory) and a ROM (Read Only Memory).

A remaining amount estimation program 44 is stored in the storage unit 40. The remaining amount estimation program 44 is a program for causing the remaining amount estimation device 30 to estimate the wire remaining amount S. Moreover, it should be noted that the information stored in the storage unit 40 is not limited to being the remaining amount estimation program 44. Various types of information are appropriately stored as necessary in the storage unit 40. For example, the remaining amount estimation device 30 according to the present embodiment also serves in a dual manner as the control device 24. In this case, the machining conditions 46 and the machining program 48 may be stored in the storage unit 40.

The computation unit 42 includes a processor. For example, the computation unit 42 includes a CPU (Central Processing Unit) and a GPU (Graphics Processing Unit). The computation unit 42 is capable of referring as appropriate to the information that is stored in the storage unit 40.

The computation unit 42 includes an acquisition unit 50, an estimation calculation unit (first estimation calculation unit) 52, a comparison unit 54, a warning generation unit 56, and a display control unit 58 (refer to FIG. 2). The acquisition unit 50, the estimation calculation unit 52, the comparison unit 54, the warning generation unit 56, and the display control unit 58 are realized by the computation unit 42 executing the remaining amount estimation program 44.

The acquisition unit 50 includes a first signal analysis unit 501 and a second signal analysis unit 502 (refer to FIG. 2) .

The first signal analysis unit 501 analyzes the first detection signal 32. In accordance with this feature, the first signal analysis unit 501 acquires a first rotational position 60. The first rotational position 60 indicates the rotational position of the wire bobbin 18. The first rotational position 60 is stored in the storage unit 40. The first rotational position 60 is referred to by the estimation calculation unit 52.

The second signal analysis unit 502 analyzes the second detection signal 34. In accordance with this feature, the second signal analysis unit 502 acquires a second rotational position 62. The second rotational position 62 indicates the rotational position of the first roller 201. The second rotational position 62 is stored in the storage unit 40. The second rotational position 62 is referred to by the estimation calculation unit 52.

The estimation calculation unit 52 includes a ratio calculation unit 521 and a remaining amount calculation unit 522 (refer to FIG. 2).

The ratio calculation unit 521 calculates a first ratio $\alpha$. The first ratio $\alpha$ indicates a ratio of an amount of rotation of the first roller 201 with respect to the amount of rotation of the wire bobbin 18. The first ratio $\alpha$ is calculated based on the first rotational position 60 and the second rotational position 62. However, the first ratio $\alpha$ is the ratio at the starting time of a predetermined period T. The predetermined period T is a period during which the wire electrode 16 is fed out from the wire bobbin 18. A range of the predetermined period T is optionally designated by the operator. However, the remaining amount estimation device 30 may automatically set the range of the predetermined period T.

The first ratio $\alpha$ is expressed by the following Equation (1). The values indicated by the respective characters in Equation (1) are as follows. In particular, "$\alpha$: first ratio". "$\theta_{18}$: amount of rotation of the wire bobbin 18 at the starting time of the predetermined period T". "$\theta_{20}$: amount of rotation of the first roller 201 at the starting time of the predetermined period T".

$$\alpha = \theta_{20} / \theta_{18} \cdots (1)$$

The first ratio $\alpha$ is referred to by the remaining amount calculation unit 522.

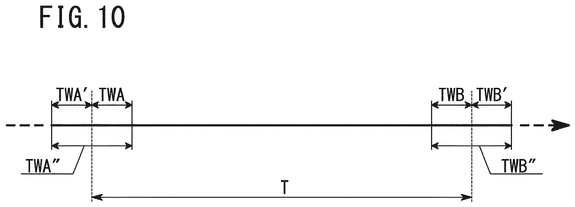

FIG. 10 is an explanatory diagram of the predetermined period T. In FIG. 10, a time flow is illustrated in which the predetermined period T is included.

The denominator (the amount of rotation $\theta_{18}$) in Equation (1) is not zero. Accordingly, the "starting time" of the predetermined period T has a time width (TWA, TWA', or TWA") which is on the order of being capable of changing the first rotational position 60. In this case, the amount of rotation $\theta_{18}$ indicates the amount of change in the first rotational position 60 in the time width TWA, the time width TWA', or the time width TWA". Further, the amount of rotation $\theta_{20}$ indicates the amount of change in the second rotational position 62 in the time width TWA, the time width TWA', or the time width TWA".

The starting point of the time width TWA in FIG. 10 coincides with the starting point of the predetermined period T. The ending point of the time width TWA is a point in time after the starting point of the predetermined period T.

The starting point of the time width TWA' in FIG. 10 is a point in time prior to the starting point of the predetermined period T. The ending point of the time width TWA' coincides with the starting point of the predetermined period T.

The starting point of the time width TWA" in FIG. 10 is a point in time prior to the starting point of the predetermined period T. The ending point of the time width TWA" is a point in time after the starting point of the predetermined period T.

Moreover, it should be noted that, in the case that the acquisition unit 50 acquires the first rotational position 60 and the second rotational position 62 in the time width TWA' or the time width TWA", the feeding of the wire electrode starts from prior to the starting point of the predetermined period T.

Further, the ratio calculation unit 521 calculates a second ratio $\beta$. The second ratio $\beta$ indicates a ratio of an amount of rotation of the first roller 201 with respect to the amount of rotation of the wire bobbin 18. The second ratio $\beta$ is calculated based on the first rotational position 60 and the second rotational position 62. However, the second ratio $\beta$ is the ratio at the ending time of the predetermined period T.

The second ratio $\beta$ is expressed by the following Equation (2). The values indicated by the respective characters in Equation (2) are as follows. In particular, "$\beta$: second ratio". "$\theta'_{18}$: amount of rotation of the wire bobbin 18 at the ending time of the predetermined period T", and "$\theta'_{20}$: amount of rotation of the first roller 201 at the ending time of the predetermined period T".

$$\beta = \theta'_{20} / \theta'_{18} \cdots (2)$$

The denominator (the amount of rotation $\theta'_{18}$) in Equation (2) is not zero. Accordingly, the "ending time" of the predetermined period T has a time width (TWB, TWB', or TWB") which is on the order of being capable of changing the first rotational position 60 (refer to FIG. 10). In this case, the amount of rotation $\theta'_{18}$ indicates the amount of change in the first rotational position 60 in the time width TWB, the time width TWB', or the time width TWB". Further, the amount of rotation $\theta'_{20}$ indicates the amount of change in the second rotational position 62 in the time width TWB, the time width TWB', or the time width TWB".

The starting point of the time width TWB in FIG. 10 is a point in time prior to the ending point of the predetermined period T. The ending point of the time width TWB coincides with the ending point of the predetermined period T.

The starting point of the time width TWB' in FIG. 10 coincides with the ending point of the predetermined period T. The ending point of the time width TWB' is a point in time after the ending point of the predetermined period T.

The starting point of the time width TWB'' in FIG. 10 is a point in time prior to the ending point of the predetermined period T. The ending point of the time width TWB'' is a point in time after the ending point of the predetermined period T.

Moreover, it should be noted that, in the case that the acquisition unit 50 acquires the first rotational position 60 and the second rotational position 62 in the time width TWB' or the time width TWB'', the feeding of the wire electrode continues even after the ending point of the predetermined period T.

Moreover, it should be noted that, in the case that the feeding mechanism 14 feeds out the wire electrode 16, the following Equation (3) is satisfied. The values indicated by the respective characters in Equation (3) are as follows. In particular, "Q: roller radius (half the roller diameter)" (refer to FIG. 1). "$\theta_{20}$: amount of rotation of the first roller 201". "R: winding radius (half the winding diameter) of the wire electrode 16 that is wound around the wire bobbin 18" (refer to FIG. 1). "$\theta_{18}$: amount of rotation of the wire bobbin 18".

$$Q\theta_{20} = R\theta_{18} \cdots (3)$$

The roller radius Q is constant. In this case, the amount of rotation $\theta_{20}$ for feeding out a certain amount of the wire electrode 16 is also constant. On the other hand, the winding radius R becomes smaller as the wire remaining amount S decreases. Accordingly, the amount of rotation $\theta_{18}$ for feeding out a certain amount of the wire electrode 16 gradually increases based on Equation (3).

From the foregoing, the following respective relationships are satisfied. In particular, the amount of rotation $\theta_{20}$ in Equation (1) and the amount of rotation $\theta'_{20}$ in Equation (2) are equal ($\theta_{20} = \theta'_{20}$). Further, the amount of rotation $\theta'_{18}$ in Equation (2) is larger than the amount of rotation $\theta_{18}$ in Equation (1) ($\theta_{18} < \theta'_{18}$). Thus, the second ratio $\beta$ is smaller than the first ratio $\alpha$.

The second ratio $\beta$ is referred to by the remaining amount calculation unit 522.

The remaining amount calculation unit 522 calculates the wire remaining amount S based on the following Equation (4). The values indicated by the respective characters in Equation (4) are as follows. In particular, "S: wire remaining amount", "$\alpha$: first ratio", "$\beta$: second ratio", "Q: roller radius", "L: barrel radius (half of the barrel diameter) of the wire bobbin 18" (refer to FIG. 1 or FIG. 5), "$\varphi$: total amount of rotation of the first roller 201", and "$\pi$: Pi (circle ratio: the ratio of the circumference of a circle to its diameter)".

$$S = (\beta^2 Q^2 - L^2) 2\pi\varphi / [Q(\alpha^2 - \beta^2)360°] \cdots (4)$$

Moreover, it should be noted that the roller radius Q and the barrel radius L are stored beforehand in the storage unit 40. The total amount of rotation $\varphi$ is the total amount of rotation of the first roller 201 during the predetermined period T. Accordingly, the total amount of rotation $\varphi$ is acquired based on the second rotational position 62.

The wire remaining amount S indicates an estimated value of the remaining amount of the wire electrode 16 that is wound around the wire bobbin 18 at the ending time of the predetermined period T. The wire remaining amount S is referred to by the comparison unit 54.

The comparison unit 54 compares the wire remaining amount S and a wire estimated amount S'. The wire estimated amount S' is an estimated amount of the wire remaining amount S required for electric discharge machining. The wire estimated amount S' is calculated, for example, based on the machining program 48. Moreover, it should be noted that the wire estimated amount S' may be calculated based not only on the machining program 48, but also on the machining conditions 46.

Further, the comparison unit 54 determines whether or not the wire remaining amount S is less than the wire estimated amount S'. The determination is made based on the comparison result. In the case that the wire remaining amount S is less than the wire estimated amount S', the comparison unit 54 invokes the warning generation unit 56.

The warning generation unit 56 generates a warning. The warning is generated depending on the comparison result. The warning is generated in a message format that can be displayed on the display unit 36. Such a message indicates, for example, that the wire remaining amount S is less than the wire estimated amount S'. The generated warning is referred to by the display control unit 58.

The display control unit 58 controls the display unit 36. The display control unit 58 causes the wire remaining amount S that is estimated, to be displayed on the display screen 361. In accordance with this feature, the operator is notified of the wire remaining amount S. Further, the display control unit 58 also displays, on the display screen 361, a message generated by the warning generation unit 56. In accordance with this feature, the operator is notified that the wire remaining amount S is less than the wire estimated amount S'.

Moreover, it should be noted that the information displayed on the display screen 361 by the display control unit 58 is not limited to only being the wire remaining amount S and the message. For example, the display control unit 58 may also display on the display screen 361 the comparison result carried out by the comparison unit 54.

The remaining amount estimation device 30 calculates the wire remaining amount S without using the degree of denseness and the winding diameter (the winding radius R). Accordingly, there is no necessity for the operator to measure the degree of denseness and the winding diameter (the winding radius R). Thus, the remaining amount estimation device 30 reduces the burden imposed on the operator. A description of the remaining amount estimation device 30 has been given above.

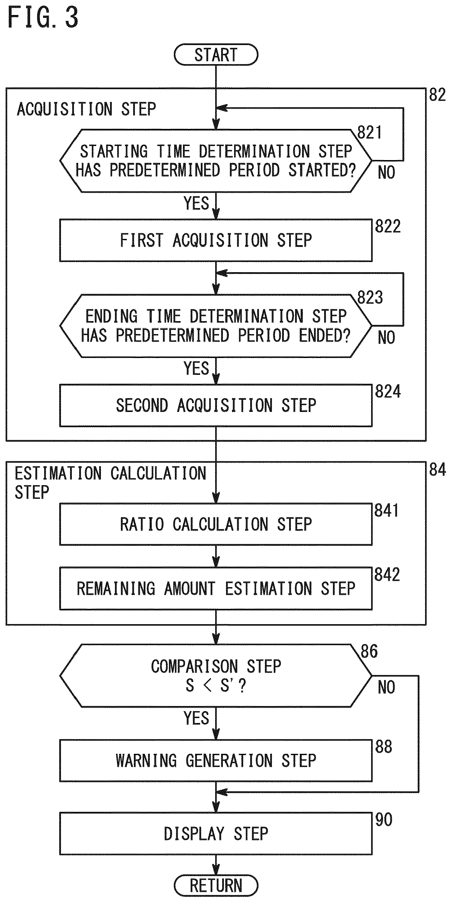

FIG. 3 is a flowchart illustrating a process flow of the remaining amount estimation method according to the embodiment.

The remaining amount estimation method is a method for estimating the wire remaining amount S. The remaining amount estimation method is executed by the remaining amount estimation device 30. The remaining amount estimation method includes an acquisition step 82, an estimation calculation step 84, a comparison step 86, a warning generation step 88, and a display step 90 (refer to FIG. 3).

The remaining amount estimation device 30 executes the acquisition step 82. The acquisition step 82 includes a starting time determination step 821, a first acquisition step 822, an ending time determination step 823, and a second acquisition step 824 (refer to FIG. 3).

In the starting time determination step 821, the acquisition unit 50 determines whether or not the predetermined period T has started. In the case that the starting time of the predetermined period T has occurred (starting time determination step 821: YES), the acquisition unit 50 executes the first acquisition step 822.

In the first acquisition step 822, the acquisition unit 50 acquires the first rotational position 60 and the second rotational position 62. In this instance, the acquired first rotational position 60 indicates the rotational position of the wire bobbin 18 at the starting time of the predetermined period T. Further, in this instance, the acquired second rotational position 62 indicates the rotational position of the first roller 201 at the ending time of the predetermined period T.

In the ending time determination step 823, the acquisition unit 50 determines whether or not the predetermined period T has ended. In the case that the ending time of the predetermined period T has occurred (ending time determination step 823: YES), the acquisition unit 50 executes the second acquisition step 824.

In the second acquisition step 824, the acquisition unit 50 acquires the first rotational position 60 and the second rotational position 62. In this instance, the acquired first rotational position 60 indicates the rotational position of the wire bobbin 18 at the ending time of the predetermined period T. Further, in this instance, the acquired second rotational position 62 indicates the rotational position of the first roller 201 at the ending time of the predetermined period T. Next, following the acquisition step 82, the remaining amount estimation device 30 executes the estimation calculation step 84.

The estimation calculation step 84 includes a ratio calculation step 841 and a remaining amount estimation step 842 (refer to FIG. 3).

In the ratio calculation step 841, the ratio calculation unit 521 calculates the first ratio $\alpha$ and the second ratio $\beta$. Moreover, it should be noted that the first ratio $\alpha$ may be calculated prior to the end of the predetermined period T. Accordingly, the remaining amount estimation device 30 may initiate the ratio calculation step 841 after the first acquisition step 822. In this case, the ratio calculation step 841 may be executed in parallel with the ending time determination step 823 or the second acquisition step 824.

In the remaining amount estimation step 842, the remaining amount calculation unit 522 calculates the wire remaining amount S. Next, following the estimation calculation step 84, the remaining amount estimation device 30 executes the comparison step 86.

In the comparison step 86, the comparison unit 54 compares the estimation result of the wire remaining amount S and the wire estimated amount S'. In the case that the estimated wire remaining amount S is less than the wire estimated amount S' (step 86: YES), the remaining amount estimation device 30 executes the warning generation step 88. In the case that the estimated wire remaining amount S is greater than or equal to the wire estimated amount S' (step 86: NO), the remaining amount estimation device 30 executes the display step 90.

In the warning generation step 88, the warning generation unit 56 generates a warning. The warning is in the form of a message. Such a message indicates, for example, that the wire remaining amount S is insufficient. Next, following the warning generation step 88, the remaining amount estimation device 30 executes the display step 90.

In the display step 90, the display control unit 58 displays the wire remaining amount S on the display screen 361. Further, in the case that the warning generation step 88 is completed beforehand, the display control unit 58 also causes the generated warning to be displayed on the display screen 361.

In the case that the remaining amount estimation method shown in FIG. 3 is executed, there is no necessity for the operator to measure both the degree of denseness and the winding radius R. Accordingly, the burden imposed on the operator is reduced. A description of the remaining amount estimation method of FIG. 3 has been given above.

[Exemplary Modifications]

Exemplary modifications of the above-described embodiment will be described below. However, in the description that follows, explanations that overlap with those of the above-described embodiment will be omitted insofar as possible. Unless otherwise specified, reference numerals for constituent elements that have already been described in the context of the above-described embodiment are reused from the embodiment.

(Exemplary Modification 1)

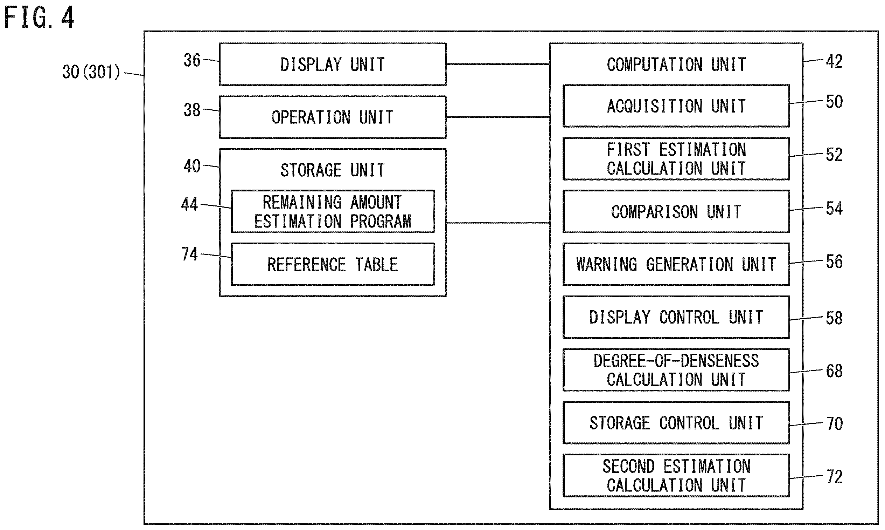

FIG. 4 is a configuration diagram of the remaining amount estimation device 30 (301) according to an Exemplary Modification 1.

The remaining amount estimation device 301 is equipped with the constituent elements of the remaining amount estimation device 30 according to the embodiment (refer to FIG. 2). However, in FIG. 4, illustration of certain ones of the constituent elements is omitted.

The remaining amount estimation device 301 further includes a degree-of-denseness calculation unit 68, a storage control unit 70, and a second estimation calculation unit 72. The degree-of-denseness calculation unit 68, the storage control unit 70, and the second estimation calculation unit 72 are realized by the computation unit 42 executing the remaining amount estimation program 44. In relation to this point, the remaining amount estimation program 44 is changed as appropriate.

FIG. 5 is an explanatory diagram of the wire bobbin 18 around which the wire electrode 16 is wound. In FIG. 5, cross-sectional views of the wire electrode 16 and the wire bobbin 18 are illustrated. Moreover, it should be noted that the imaginary straight line O is the axis of rotation of the wire bobbin 18.

The degree-of-denseness calculation unit 68 calculates the degree of denseness A based on the following Equation (5). The values indicated by the respective characters in Equation (5) are as follows. More specifically, "A: degree of denseness". "$\alpha$: first ratio". "$\beta$: second ratio". "D: wire diameter of the wire electrode 16" (refer to FIG. 5). "H: Inner width of the wire bobbin 18" (refer to FIG. 5). "Q: roller radius". "$\varphi$: total amount of rotation of the first roller 201".

$$A = \pi D^2 \varphi / [2HQ(\alpha^2 - \beta^2)360°] \cdots (5)$$

The storage control unit 70 associates the degree of denseness A, the wire diameter D, the inner width H, and the barrel radius L with each other. In accordance with this feature, the storage control unit 70 creates a reference table 74.

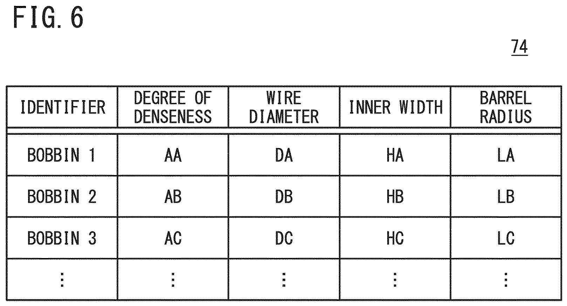

FIG. 6 is an exemplary configuration of the reference table 74 that is stored in the storage unit 40.

The reference table 74 includes a column for an identifier (a name or a number) of the wire bobbin 18, a column for the degree of denseness A, a column for the wire diameter D, a column for the inner width H, and a column for the barrel radius L. In each of the rows, the pieces of information are arranged horizontally in a corresponding relation alongside one another. For example, the reference table 74 includes the item "identifier: bobbin 1" for a certain one of the wire bobbins 18 (refer to FIG. 6). The degree of denseness A of the wire electrode 16 that is wound around the wire bobbin 18 of the item "identifier: bobbin 1" is indicated by "AA". The wire diameter D of that wire electrode 16 is indicated by "DA". Further, the inner width H of the wire bobbin 18 of the item "identifier: bobbin 1" is indicated by "HA". The barrel radius L of the wire bobbin 18 of the item "identifier: bobbin 1" is indicated by "LA".

Moreover, it should be noted that, in many cases, the wire electrode 16 is designed on the basis of a predetermined standard regarding the wire electrode 16. Accordingly, the operator is capable of easily specifying the wire diameter D on the basis of the standard for the wire electrode 16. Further, in many cases, the wire bobbin 18 is designed on the basis of a predetermined standard regarding the wire bobbin 18. Accordingly, the operator is capable of easily specifying each of the inner width H of the wire bobbin 18, and the barrel radius L of the wire bobbin 18, on the basis of the standard for the wire bobbin 18.

The storage control unit 70 stores the reference table 74 in the storage unit 40. The reference table 74 is referred to by the second estimation calculation unit 72.

The second estimation calculation unit 72 estimates the remaining wire amount S based on the following Equation (6). The values indicated by the respective characters in Equation (6) are as follows. In particular, "S: wire remaining amount". "R: winding radius". "A: degree of denseness". "H: Inner width". "L: barrel radius". "D: wire diameter". Moreover, it should be noted that the degree of denseness A, the wire diameter D, the inner width H, and the barrel radius L are associated with each other in the reference table 74. The winding radius R is measured in advance by the operator.

$$S = 4(R^2 - L^2)HA/D^2 \cdots (6)$$

The reference table 74 includes identifiers corresponding to the degree of denseness A, the wire diameter D, the inner width H, and the barrel radius L. Accordingly, by specifying the identifiers, the operator is capable of easily specifying the degree of denseness A, the wire diameter D, the inner width H, and the barrel radius L.

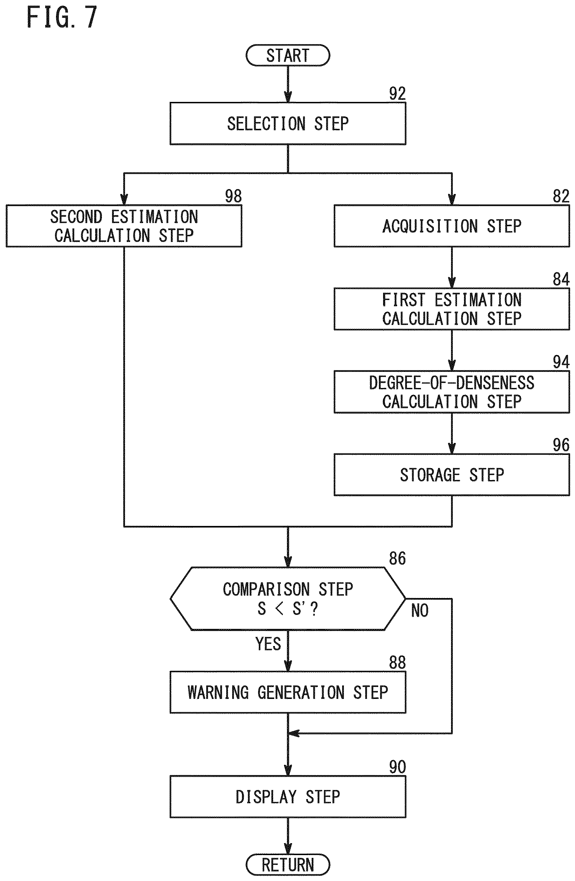

FIG. 7 is a flowchart illustrating a process flow of a remaining amount estimation method according to the Exemplary Modification 1. Moreover, it should be noted that the "estimation calculation step" in FIG. 3 is described as the "first estimation calculation step" in FIG. 7.

The remaining amount estimation method shown in FIG. 7 includes the acquisition step 82, a first estimation calculation step 84, the comparison step 86, the warning generation step 88, and the display step 90. In relation to this point, the remaining amount estimation method shown in FIG. 7 shares steps in common with the remaining amount estimation method shown in FIG. 3. However, the remaining amount estimation method shown in FIG. 7 further includes a selection step 92, a degree-of-denseness calculation step 94, a storage step 96, and a second estimation calculation step 98. In relation to this point, the remaining amount estimation method shown in FIG. 7 differs from the remaining amount estimation method shown in FIG. 3.

The remaining amount estimation device 301 executes the selection step 92. In the selection step 92, the operation unit 38 accepts an input operation input by the operator. In the selection step 92, the operator selects the first estimation calculation step 84 or the second estimation calculation step 98.

In the case that the operator has selected the first estimation calculation step 84, the remaining amount estimation device 301 executes the acquisition step 82. Descriptions concerning each of the acquisition step 82 and the first estimation calculation step 84 are omitted in the present exemplary modification. Next, following the first estimation calculation step 84, the remaining amount estimation device 301 executes the degree-of-denseness calculation step 94.

In the degree-of-denseness calculation step 94, the degree-of-denseness calculation unit 68 calculates the degree of denseness A. The degree of denseness A is calculated on the basis of Equation (5). In this instance, the degree-of-denseness calculation unit 68 reuses the first ratio $\alpha$, the second ratio $\beta$, and the total amount of rotation $\varphi$ that were used in the most recent execution of the first estimation calculation step 84. Next, following the degree-of-denseness calculation step 94, the remaining amount estimation device 301 executes the storage step 96.

In the storage step 96, the storage control unit 70 stores the degree of denseness A in the storage unit 40. In this instance, the degree of denseness A is associated with the wire diameter D, the inner width H, and the barrel radius L. Next, following the storage step 96, the remaining amount estimation device 301 appropriately executes the comparison step 86 to the display step 90 (refer to FIG. 7).

In the case that the operator has selected the second estimation calculation step 98 in the selection step 92, the remaining amount estimation device 301 executes the second estimation calculation step 98. In the second estimation calculation step 98, the second estimation calculation unit 72 estimates the wire remaining amount S. The wire remaining amount S is calculated on the basis of Equation (6).

In the case that the second estimation calculation step 98 is executed, the acquisition step 82 is not executed. Accordingly, in the case that the second estimation calculation step 98 is executed, feeding of the wire electrode over the predetermined period T is not necessary. After the second estimation calculation step 98, the comparison step 86 to the display step 90 are executed as appropriate (refer to FIG. 7).

In the case that the second estimation calculation step 98 is executed, the operator measures the winding radius R in advance. However, there is no necessity for the operator to measure the degree of denseness A. Accordingly, the burden imposed on the operator is reduced.

In the selection step 92, the remaining amount estimation device 301 may automatically select the second estimation calculation step 98. In this case, the operator instructs the remaining amount estimation device 301 beforehand to automatically select the second estimation calculation step 98 in the selection step 92. Further, the operator specifies in advance the degree of denseness A, the wire diameter D, the inner width H, and the barrel radius L to be referred to by the second estimation calculation unit 72.

Further, the remaining amount estimation device 301 may execute the degree-of-denseness calculation step 94 prior to the first estimation calculation step 84. In that case, the first ratio $\alpha$, the second ratio $\beta$, and the total amount of rotation $\varphi$ may be calculated in the degree-of-denseness calculation step 94. Further, in that case, the first ratio $\alpha$, the second ratio $\beta$, and the total amount of rotation $\varphi$ may be reused in the first estimation calculation step 84.


(Exemplary Modification 2)

The process flow from the acquisition step 82 to the storage step 96 in FIG. 7 may be executed in relation to the wire bobbin 18 for which the degree of denseness A has been calculated in the past. In this instance, for example, a case may occur in which each of the first detection signal 32 and the second detection signal 34 includes an error (noise) therein. Due to such an error, a case may occur in which the degree of denseness A that was calculated in the past and the degree of denseness A that was calculated most recently exhibit values that are different from each other. In this case, a plurality of the degrees of denseness A are stored for the same wire bobbin 18 in the storage unit 40. However, only one value for the degree of denseness A is substituted into Equation (6). While taking into account the aforementioned assumption, according to the present exemplary modification, a description is given concerning the remaining amount estimation device 30 (302) which is capable of calculating the wire remaining amount S even in the case that a plurality of the degrees of denseness A have already been calculated concerning the same wire bobbin 18.

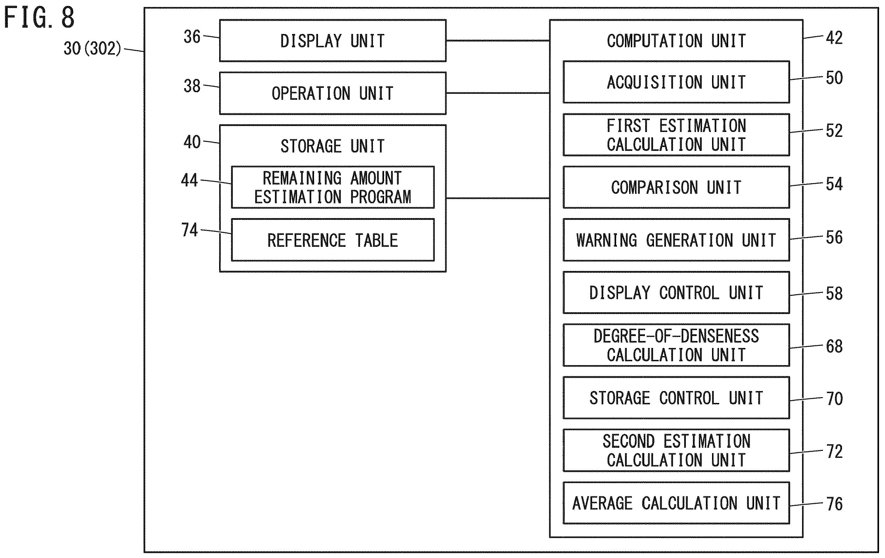

FIG. 8 is a configuration diagram of the remaining amount estimation device 302 according to Exemplary Modification 2.

The remaining amount estimation device 302 is equipped with the constituent elements of the remaining amount estimation device 301 (refer to FIG. 4). Further, the remaining amount estimation device 302 further includes an average calculation unit 76. The average calculation unit 76 is realized by the computation unit 42 executing the remaining amount estimation program 44. In relation to this point, the remaining amount estimation program 44 is changed as appropriate.

The average calculation unit 76 calculates the average value of a plurality of degrees of denseness A. In this instance, the wire diameters D that correspond respectively to the plurality of degrees of denseness A are the same. Further, the dimensions (the inner width H, the barrel radius L) of the wire bobbin 18 that correspond respectively to the plurality of the degrees of denseness A are also the same as each other.

Instead of the degree of denseness A, the second estimation calculation unit 72 substitutes the average value of the plurality of degrees of denseness A into Equation (6). In accordance with this feature, even in the case that a plurality of the degrees of denseness A have already been calculated for the same wire bobbin 18, the wire remaining amount S can be estimated. Further, by using the average value of the plurality of degrees of denseness A to estimate the wire remaining amount S, the influence of the aforementioned error on the estimation result of the wire remaining amount S is reduced.

Moreover, it should be noted that, instead of the average value of the plurality of degrees of denseness A, the average calculation unit 76 may calculate a moving average value of the plurality of degrees of denseness A. In this case, instead of the degree of denseness A, the second estimation calculation unit 72 substitutes the moving average value of the plurality of degrees of denseness A into Equation (6).

(Exemplary Modification 3)

In the present exemplary modification, a description is given concerning the remaining amount estimation device 30 (303) which causes a notification of the wire remaining amount S to be issued to the operator who is in a location separated away from the remaining amount estimation device 30.

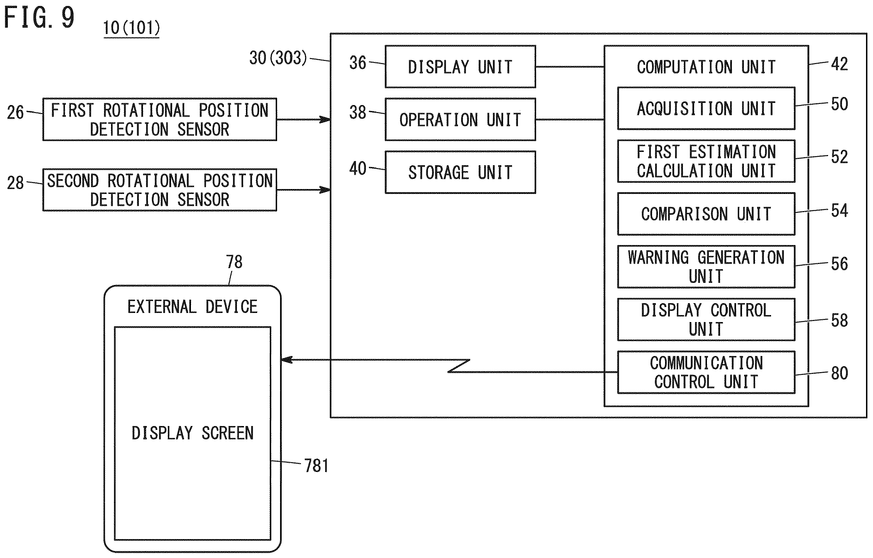

FIG. 9 is a configuration diagram of the remaining amount estimation system 10 (101) according to Exemplary Modification 3.

The remaining amount estimation system 101 includes the first rotational position detection sensor 26, the second rotational position detection sensor 28, a remaining amount estimation device 303, and an external device 78. Descriptions concerning each of the first rotational position detection sensor 26 and the second rotational position detection sensor 28 are omitted in the present exemplary modification.

The external device 78 is an electronic device (terminal) that is capable of communicating with the remaining amount estimation device 303. The external device 78 includes a display screen 781. The external device 78 can be installed in a location that is separated away from the remaining amount estimation device 303. The external device 78 may be a portable terminal that is capable of being carried by the operator.

The remaining amount estimation device 303 is equipped with the constituent elements of the remaining amount estimation device 30 according to the embodiment (refer to FIG. 2). However, in FIG. 9, illustration of certain ones of the constituent elements is omitted.

The remaining amount estimation device 303 further includes a communication control unit 80. The communication control unit 80 is realized by the computation unit 42 executing the remaining amount estimation program 44. In relation to this point, the remaining amount estimation program 44 is changed as appropriate.

The communication control unit 80 controls communications with the external device 78. In particular, the communication control unit 80 transmits the estimated wire remaining amount S to the external device 78. The external device 78 causes the received wire remaining amount S to be displayed on the display screen 781. In accordance with this feature, the operator who is not located near the remaining amount estimation device 303 is capable of confirming the wire remaining amount S.

Moreover, it should be noted that the communication control unit 80 may transmit the comparison result between the estimation result and the wire estimated amount S' to the external device 78. Further, the communication control unit 80 may transmit the warning to the external device 78.

Further, the remaining amount estimation system 101 may include a plurality of the external devices 78.

(Exemplary Modification 4)

The dimensions (the inner width H, the barrel radius L) of the wire bobbin 18 may be designated by the operator via the operation unit 38. For example, in many cases, the wire bobbin 18 is designed on the basis of a standard regarding the wire bobbin 18. However, a wire bobbin 18 may also exist having dimensions that are not based on such a standard.

In this case, the operator measures the dimensions of the wire bobbin 18. Further, the operator inputs the measurement result to the remaining amount estimation device 30 via the operation unit 38.

Moreover, it should be noted that a wire electrode 16 may also exist that is not based on the standard regarding the wire electrode 16. In the case of using such a wire electrode 16, the operator may specify the wire diameter D via the operation unit 38.

(Exemplary Modification 5)

The form of the warning is not limited to being in the form of a message. For example, the warning may also include an icon. Further, the warning may also include a sound (for example, an error tone).

(Exemplary Modification 6)

A torque motor may be connected to the wire bobbin 18. The torque motor is a motor for adjusting a rotational torque of the wire bobbin 18.

The first rotational position detection sensor 26 may detect the rotational position of a shaft of the torque motor. In this case, the rotational position of the shaft of the torque motor is treated as the first rotational position 60.

(Exemplary Modification 7)

Each of the first ratio $\alpha$ and the second ratio $\beta$ may be a ratio between the amount of rotation of the second roller 202 and the amount of rotation of the wire bobbin 18. In this case, the second detection signal 34 is output in accordance with the rotation of the second roller 202. Further, in this case, the total amount of rotation $\varphi$ may be the total amount of rotation of the second roller 202 during the predetermined period T.

(Exemplary Modification 8)

The remaining amount estimation device 30 and the control device 24 for the wire electric discharge machine 12 may be separate electronic devices.

In that case, the remaining amount estimation device 30 and the control device 24 may communicate with each other. Consequently, for example, in order to execute the acquisition step 82, the remaining amount estimation device 30 can issue a request to the control device 24 to execute feeding of the wire electrode over the predetermined period T.

Moreover, it should be noted that the present invention is not limited to the above-described embodiment and the exemplary modifications, and various configurations can be adopted therein without departing from the essence and gist of the present invention.

[Inventions that can be Obtained from the Embodiment]

The inventions that can be grasped from the above-described embodiment and the exemplary modifications thereof will be described below.

<First Invention>

The first invention is characterized by the remaining amount estimation device (30, 301, 302, 303) the wire electric discharge machine (12), wherein the wire electric discharge machine includes the wire bobbin (18), the feed roller (20) that feed the wire electrode (16) that is wound around the wire bobbin, the first rotational position detection sensor (26) that detects the first rotational position (60) of the wire bobbin, and the second rotational position detection sensor (28) that detects the second rotational position (62) of the feed roller, the remaining amount estimation device being configured to estimate the wire remaining amount (S) of the wire electrode that is wound around the wire bobbin of the wire electric discharge machine, the remaining amount estimation device including the acquisition unit (50) that acquires the first rotational position and the second rotational position, and the first estimation calculation unit (52) that estimates the wire remaining amount at the ending time of the predetermined period, based on the first ratio ($\alpha$) that is the ratio of the amount of rotation of the wire bobbin and the amount of rotation of the feed roller at the starting time of the predetermined period (T), the second ratio ($\beta$) that is the ratio of the amount of rotation of the wire bobbin and the amount of rotation of the feed roller at the ending time of the predetermined period, and the total amount of rotation ($\varphi$) that the feed roller has rotated during the predetermined period.

In accordance with such features, the wire remaining amount (S) can be obtained while reducing the burden imposed on the operator.

The first estimation calculation unit may estimate the wire remaining amount at the ending time of the predetermined period (T), based on the total amount of rotation, the first ratio, the second ratio, the barrel radius (L) of the wire bobbin, and the roller radius (Q) of the feed roller.

The first estimation calculation unit may estimate the wire remaining amount based on Equation (4).

The remaining amount estimation device may further be equipped with the degree-of-denseness calculation unit (68) that calculates the degree of denseness (A) of the wire electrode that is wound around the wire bobbin, based on the total amount of rotation, the first ratio, the second ratio, the wire diameter (D) of the wire electrode, and the dimension of the wire bobbin, the storage control unit (70) that causes the storage unit (40) to store the degree of denseness, the wire diameter, and the dimension of the wire bobbin in association with each other, and the second estimation calculation unit (72) that estimates the wire remaining amount, based on the winding radius (R) of the wire electrode that is wound around the wire bobbin, the degree of denseness, the wire diameter, and the dimension of the wire bobbin. In accordance with these features, the degree of denseness (A) can be easily calculated. Further, the wire remaining amount (S) is conserved.

The second estimation calculation unit may estimate the degree of denseness based on Equation (5).

The remaining amount estimation device may further include the average calculation unit (76), wherein, in the case that the plurality of the degrees of denseness are stored in the storage unit in association with a plurality of the wire diameters of the wire electrodes and with a plurality of the dimensions of the wire bobbins and that the wire diameters stored in association with the plurality of degrees of denseness have the same value while the dimensions stored in association with the plurality of degrees of denseness have the same value, the average calculation unit calculates the average value of the plurality of the degrees of denseness or the moving average value of the plurality of the degrees of denseness, wherein the second estimation calculation unit may estimate the wire remaining amount using the average value or the moving average value as the degree of denseness. In accordance with these features, even in the case that a plurality of the degrees of denseness (A) have already been calculated for the same wire bobbin (18), the wire remaining amount (S) can be estimated.

The remaining amount estimation device may further be equipped with the operation unit (38) that enables the operator to specify at least one of the wire diameter or the dimension of the wire bobbin. In accordance with this feature, even in the case that the dimensions of the wire bobbin (18) do not comply with a predetermined standard, the remaining amount estimation device (30) can estimate the wire remaining amount (S).

The remaining amount estimation device may further be equipped with the display control unit (58) that displays the wire remaining amount on the display unit (36). In accordance with this feature, the operator is capable of confirming the wire remaining amount (S).

The remaining amount estimation device (303) may further be equipped with the communication control unit (80) that transmits the wire remaining amount to the external device (78). In accordance with this feature, the operator who is in a location separated away from the remaining amount estimation device is capable of confirming the wire remaining amount (S).

The remaining amount estimation device may further be equipped with the warning generation unit (56) that generates the warning in accordance with the comparison result between the wire estimated amount (S') of the wire electrode required for electric discharge machining and the wire remaining amount. In accordance with this feature, the operator can be notified, for example, that the wire remaining amount (S) is insufficient.

The remaining amount estimation device may be provided in the control device (24) that controls the wire electric discharge machine.

<Second Invention>

The second invention is characterized by the remaining amount estimation method for the wire electric discharge machine (12) wherein the wire electric discharge machine includes the wire bobbin (18), the feed roller (20) that feeds the wire electrode (16) that is wound around the wire bobbin, the first rotational position detection sensor (26) that detects the first rotational position (60) of the wire bobbin, and the second rotational position detection sensor (28) that detects the second rotational position (62) of the feed roller, the remaining amount estimation method for estimating the wire remaining amount (S) of the wire electrode that is wound around the wire bobbin of the wire electric discharge machine (12), including the acquisition step (82) of acquiring the first rotational position and the second rotational position, and the estimation calculation step (84) of estimating the wire remaining amount at the ending time of the predetermined period (T), based on the first ratio ($\alpha$) that is the ratio of the amount of rotation of the wire bobbin and the amount of rotation of the feed roller at the starting time of the predetermined period, the second ratio ($\beta$) that is the ratio of the amount of rotation of the wire bobbin and the amount of rotation of the feed roller at the ending time of the predetermined period, and the total amount of rotation ($\varphi$) that the feed roller has rotated during the predetermined period,.

In accordance with such features, the wire remaining amount (S) can be obtained while reducing the burden imposed on the operator.

Reference Signs List

12: wire electric discharge machine
16: wire electrode
18: wire bobbin
20: feed roller
24: control device
26: first rotational position detection sensor
28: second rotational position detection sensor
30, 301, 302, 303: remaining amount estimation device
36: display unit
38: operation unit
40: storage unit
50: acquisition unit
52: estimation calculation unit (first estimation calculation unit)
56: warning generation unit
58: display control unit
60: first rotational position
62: second rotational position
68: degree-of-denseness calculation unit
70: storage control unit
72: second estimation calculation unit
76: average calculation unit
78: external device
80: communication control unit

**Claims**

1. A remaining amount estimation device (30, 301, 302, 303) for a wire electric discharge machine (12), wherein the wire electric discharge machine includes:

a wire bobbin (18);
a feed roller (20) configured to feed a wire electrode (16) that is wound around the wire bobbin;
a first rotational position detection sensor (26) configured to detect a first rotational position (60) of the wire bobbin; and
a second rotational position detection sensor (28) configured to detect a second rotational position (62) of the feed roller,
the remaining amount estimation device being configured to estimate a wire remaining amount (S) of the wire electrode that is wound around the wire bobbin of the wire electric discharge machine,
the remaining amount estimation device comprising:

an acquisition unit (50) configured to acquire the first rotational position and the second rotational position; and
a first estimation calculation unit (52) configured to estimate the wire remaining amount at an ending time of a predetermined period (T), based on a first ratio ($\alpha$) that is a ratio of an amount of rotation of the wire bobbin and an amount of rotation of the feed roller at a starting time of the predetermined period, a second ratio ($\beta$) that is a ratio of an amount of rotation of the wire bobbin and an amount of rotation of the feed roller at the ending time of the predetermined period, and a total amount of rotation ($\varphi$) that the feed roller has rotated during the predetermined period.

2. The remaining amount estimation device according to claim 1, wherein the first estimation calculation unit estimates the wire remaining amount at the ending time of the predetermined period, based on the total amount of rotation, the first ratio, the second ratio, a barrel radius (L) of the wire bobbin, and a roller radius (Q) of the feed roller.

3. The remaining amount estimation device according to claim 2, wherein the first estimation calculation unit estimates the wire remaining amount based on Equation (1):

$$S = (\beta^2 Q^2 - L^2)2\pi\varphi/[Q(\alpha^2 - \beta^2)360°] \cdots (1)$$

where S: the wire remaining amount, $\alpha$: the first ratio, $\beta$: the second ratio, Q: the roller radius, L: the barrel radius of the wire bobbin, $\varphi$: the total amount of rotation of the feed roller, $\pi$: Pi.

4. The remaining amount estimation device (301, 302, 303) according to any one of claims 1 to 3, further comprising:

   a degree-of-denseness calculation unit (68) configured to calculate a degree of denseness (A) of the wire electrode that is wound around the wire bobbin, based on the total amount of rotation, the first ratio, the second ratio, a wire diameter (D) of the wire electrode, and a dimension of the wire bobbin;
   a storage control unit (70) configured to cause a storage unit (40) to store the degree of denseness, the wire diameter, and the dimension of the wire bobbin in association with each other; and
   a second estimation calculation unit (72) configured to estimate the wire remaining amount, based on a winding radius (R) of the wire electrode that is wound around the wire bobbin, the degree of denseness, the wire diameter, and the dimension of the wire bobbin.

5. The remaining amount estimation device according to claim 4, wherein the second estimation calculation unit estimates the degree of denseness based on Equation (2):

$$A = \pi D^2\varphi/[2HQ(\alpha^2 - \beta^2)360°] \cdots (2)$$

where A: the degree of denseness of the wire electrode that is wound around the wire bobbin, $\alpha$: the first ratio, $\beta$: the second ratio, D: the wire diameter, H: an inner width of the wire bobbin, Q: a roller radius, $\varphi$: the total amount of rotation of the feed roller.

6. The remaining amount estimation device (302, 303) according to claim 4 or 5, further comprising an average calculation unit (76), wherein, in a case that a plurality of the degrees of denseness are stored in the storage unit in association with a plurality of the wire diameters of the wire electrodes and with a plurality of the dimensions of the wire bobbins and that the wire diameters stored in association with the plurality of degrees of denseness have a same value while the dimensions stored in association with the plurality of degrees of denseness have a same value, the average calculation unit calculates an average value of the plurality of degrees of denseness or a moving average value of the plurality of degrees of denseness,
   wherein the second estimation calculation unit estimates the wire remaining amount using the average value or the moving average value as the degree of denseness.

7. The remaining amount estimation device according to any one of claims 4 to 6, further comprising an operation unit (38) configured to enable an operator to specify at least one of the wire diameter or the dimension of the wire bobbin.

8. The remaining amount estimation device according to any one of claims 1 to 7, further comprising a display control unit (58) configured to display the wire remaining amount on a display unit (36).

9. The remaining amount estimation device (303) according to any one of claims 1 to 8, further comprising a communication control unit (80) configured to transmit the wire remaining amount to an external device (78).

10. The remaining amount estimation device according to any one of claims 1 to 9, further comprising a warning generation unit (56) configured to generate a warning in accordance with a comparison result between a wire estimated amount (S') of the wire electrode required for electric discharge machining and the wire remaining amount.

11. The remaining amount estimation device according to any one of claims 1 to 10, wherein the remaining amount estimation device is provided in a control device (24) configured to control the wire electric discharge machine.

12. A remaining amount estimation method for a wire electric discharge machine (12), wherein the wire electric discharge machine includes:

a wire bobbin (18);

a feed roller (20) configured to feed a wire electrode (16) that is wound around the wire bobbin;

a first rotational position detection sensor (26) configured to detect a first rotational position (60) of the wire bobbin; and

a second rotational position detection sensor (28) configured to detect a second rotational position (62) of the feed roller,

the remaining amount estimation method for estimating a wire remaining amount (S) of the wire electrode that is wound around the wire bobbin of the wire electric discharge machine, comprising:

an acquisition step (82) of acquiring the first rotational position and the second rotational position; and

an estimation calculation step (84) of estimating the wire remaining amount at an ending time of a predetermined period (T), based on a first ratio ($\alpha$) that is a ratio of an amount of rotation of the wire bobbin and an amount of rotation of the feed roller at a starting time of the predetermined period, a second ratio ($\beta$) that is a ratio of an amount of rotation of the wire bobbin and an amount of rotation of the feed roller at the ending time of the predetermined period, and a total amount of rotation ($\varphi$) that the feed roller has rotated during the predetermined period.

FIG. 1

# FIG. 2

30(24)

**DISPLAY UNIT** — 36
- DISPLAY SCREEN — 361

**OPERATION UNIT** — 38

**STORAGE UNIT** — 40
- REMAINING AMOUNT ESTIMATION PROGRAM — 44
- MACHINING CONDITIONS — 46
- MACHINING PROGRAM — 48
- FIRST ROTATIONAL POSITION — 60
- SECOND ROTATIONAL POSITION — 62

**COMPUTATION UNIT** — 42
- ACQUISITION UNIT — 50
  - FIRST SIGNAL ANALYSIS UNIT — 501
  - SECOND SIGNAL ANALYSIS UNIT — 502
- ESTIMATION CALCULATION UNIT (FIRST ESTIMATION CALCULATION UNIT) — 52
  - RATIO CALCULATION UNIT — 521
  - REMAINING AMOUNT CALCULATION UNIT — 522
- COMPARISON UNIT — 54
- WARNING GENERATION UNIT — 56
- DISPLAY CONTROL UNIT — 58

# FIG. 3

START

**ACQUISITION STEP** 82

STARTING TIME DETERMINATION STEP
HAS PREDETERMINED PERIOD STARTED? 821 — NO

YES ↓

FIRST ACQUISITION STEP 822

ENDING TIME DETERMINATION STEP
HAS PREDETERMINED PERIOD ENDED? 823 — NO

YES ↓

SECOND ACQUISITION STEP 824

**ESTIMATION CALCULATION STEP** 84

RATIO CALCULATION STEP 841

REMAINING AMOUNT ESTIMATION STEP 842

COMPARISON STEP
S < S' ? 86 — NO

YES ↓

WARNING GENERATION STEP 88

DISPLAY STEP 90

RETURN

FIG. 4

30(301)

| | |
|---|---|
| 36 — DISPLAY UNIT | COMPUTATION UNIT — 42 |
| 38 — OPERATION UNIT | ACQUISITION UNIT — 50 |
| 40 — STORAGE UNIT | FIRST ESTIMATION CALCULATION UNIT — 52 |
| 44 — REMAINING AMOUNT ESTIMATION PROGRAM | COMPARISON UNIT — 54 |
| 74 — REFERENCE TABLE | WARNING GENERATION UNIT — 56 |
| | DISPLAY CONTROL UNIT — 58 |
| | DEGREE-OF-DENSENESS CALCULATION UNIT — 68 |
| | STORAGE CONTROL UNIT — 70 |
| | SECOND ESTIMATION CALCULATION UNIT — 72 |

# FIG. 5

FIG. 6

<u>74</u>

| IDENTIFIER | DEGREE OF DENSENESS | WIRE DIAMETER | INNER WIDTH | BARREL RADIUS |
|---|---|---|---|---|
| BOBBIN 1 | AA | DA | HA | LA |
| BOBBIN 2 | AB | DB | HB | LB |
| BOBBIN 3 | AC | DC | HC | LC |
| ⋮ | ⋮ | ⋮ | ⋮ | ⋮ |

# FIG. 7

```
                    ( START )
                        |
                        v
                 ┌──────────────┐ 92
                 │ SELECTION STEP │
                 └──────────────┘
                        |
            ┌───────────┴───────────────┐
            v                           v
   ┌──────────────────┐ 98      ┌──────────────────┐ 82
   │ SECOND ESTIMATION │        │ ACQUISITION STEP │
   │ CALCULATION STEP  │        └──────────────────┘
   └──────────────────┘                 |
            |                           v
            |                  ┌──────────────────┐ 84
            |                  │ FIRST ESTIMATION │
            |                  │ CALCULATION STEP │
            |                  └──────────────────┘
            |                           |
            |                           v
            |                  ┌──────────────────────┐ 94
            |                  │ DEGREE-OF-DENSENESS   │
            |                  │ CALCULATION STEP      │
            |                  └──────────────────────┘
            |                           |
            |                           v
            |                  ┌──────────────────┐ 96
            |                  │ STORAGE STEP     │
            |                  └──────────────────┘
            |                           |
            └───────────┬───────────────┘
                        v
              ╱─────────────────────╲ 86
             ╱ COMPARISON STEP        ╲
             ╲   S < S' ?             ╱──── NO ──┐
              ╲─────────────────────╱           │
                        |                        │
                       YES                       │
                        v                        │
            ┌──────────────────────────┐ 88      │
            │ WARNING GENERATION STEP   │         │
            └──────────────────────────┘         │
                        |                        │
                        v<───────────────────────┘
            ┌──────────────────────────┐ 90
            │ DISPLAY STEP              │
            └──────────────────────────┘
                        |
                        v
                   ( RETURN )
```

22

EP 4 357 059 A1

FIG. 8

30 (302)

| | |
|---|---|
| 36 — | DISPLAY UNIT |
| 38 — | OPERATION UNIT |
| 40 — | STORAGE UNIT |
| 44 — | REMAINING AMOUNT ESTIMATION PROGRAM |
| 74 — | REFERENCE TABLE |

COMPUTATION UNIT — 42

| | |
|---|---|
| ACQUISITION UNIT | — 50 |
| FIRST ESTIMATION CALCULATION UNIT | — 52 |
| COMPARISON UNIT | — 54 |
| WARNING GENERATION UNIT | — 56 |
| DISPLAY CONTROL UNIT | — 58 |
| DEGREE-OF-DENSENESS CALCULATION UNIT | — 68 |
| STORAGE CONTROL UNIT | — 70 |
| SECOND ESTIMATION CALCULATION UNIT | — 72 |
| AVERAGE CALCULATION UNIT | — 76 |

# FIG. 9   <u>10(101)</u>

EP 4 357 059 A1

FIG. 10

**INTERNATIONAL SEARCH REPORT**

International application No.

PCT/JP2021/027283

| A. CLASSIFICATION OF SUBJECT MATTER |
|---|
| B23H 7/02(2006.01)i |
| FI: B23H7/02 R |

According to International Patent Classification (IPC) or to both national classification and IPC

| B. FIELDS SEARCHED |
|---|

Minimum documentation searched (classification system followed by classification symbols)
B23H7/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2510109 Y2 (BROTHER KOGYO KABUSHIKI KAISHA) 11 September 1996 (1996-09-11) column 4, line 36 to column 8, line 35 | 1-12 |
| A | JP 2736544 B2 (SEIBU ELECTRIC & MACH CO LTD) 02 April 1998 (1998-04-02) column 4, line 3 to column 8, line 23 | 1-12 |
| A | JP 2003-25155 A (BROTHER IND LTD) 29 January 2003 (2003-01-29) paragraphs [0019]-[0070] | 1-12 |
| A | JP 2010-179377 A (FANUC LTD) 19 August 2010 (2010-08-19) paragraphs [0017]-[0053] | 1-12 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 August 2021 (05.08.2021) | 07 September 2021 (07.09.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application No.

PCT/JP2021/027283

| Patent Documents referred in the Report | Publication Date | Patent Family | Publication Date |
|---|---|---|---|
| JP 2510109 Y2 | 11 Sep. 1996 | US 4998003 A<br>column 3, line 15 to<br>column 7, line 7<br>KR 20-1990-0006400 U | |
| JP 2736544 B2 | 02 Apr. 1998 | (Family: none) | |
| JP 2003-25155 A | 29 Jan. 2003 | (Family: none) | |
| JP 2010-179377 A | 19 Aug. 2010 | (Family: none) | |

Form PCT/ISA/210 (patent family annex) (January 2015)

**EP 4 357 059 A1**

**REFERENCES CITED IN THE DESCRIPTION**

**Patent documents cited in the description**

- JP H02039824 U